# EUROPEAN PATENT SPECIFICATION

(11) **EP 1 001 043 B1**
(45) Date of publication and mention of the grant of the patent: **30.07.2003**
(21) Application number: 99121959.3
(22) Date of filing: 09.11.1999
(51) Int. Cl.: C22C 38/18

(54) **Martensitic stainless steel parts and method for producing the same**
Teile aus martensitischem rostfreiem Stahl und Verfahren zu ihrer Herstellung
Elements en acier inoxydable martensitique et procédé pour leur fabrication

(30) Priority: 09.11.1998 JP 31797398
(43) Date of publication of application: 17.05.2000
(73) Proprietor: DAIDO TOKUSHUKO KABUSHIKI KAISHA, Naka-ku Nagoya-city Aichi-prefecture (JP)
(72) Inventor: Egawa, Tokuo, Nagoya-city, Aichi-prefecture (JP); Takada, Katunori, Nagoya-city, Aichi-prefecture (JP); Takayama, Akitake, Midori-ku, Nagoya-city, Aichi-prefecture (JP); Shimizu, Narito, Nagoya-city, Aichi-prefecture (JP); Ishikawa, Takeshi, Anjyo-city, Aichi-prefecture (JP)
(74) Representative: Reinhard - Skuhra - Weise & Partner

(56) References cited:
- US-A- 3 489 620
- PATENT ABSTRACTS OF JAPAN vol. 1996, no. 01, 31 January 1996 (1996-01-31) & JP 07 238348 A (SANYO SPECIAL STEEL CO LTD), 12 September 1995 (1995-09-12)
- PATENT ABSTRACTS OF JAPAN vol. 1996, no. 11, 29 November 1996 (1996-11-29) & JP 08 176752 A (AICHI STEEL WORKS LTD;AISAN IND CO LTD), 9 July 1996 (1996-07-09)
- PATENT ABSTRACTS OF JAPAN vol. 016, no. 249 (C-0948), 8 June 1992 (1992-06-08) & JP 04 056749 A (HITACHI METALS LTD), 24 February 1992 (1992-02-24)
- PATENT ABSTRACTS OF JAPAN vol. 018, no. 006 (M-1537), 7 January 1994 (1994-01-07) & JP 05 248540 A (NIPPON PISTON RING CO LTD), 24 September 1993 (1993-09-24)

## Description

### BACKGROUND OF THE INVENTION

### 1. Field of the Invention

This invention relates to martensitic stainless steel parts subjected to induction hardening on their contact surface, which is used as, for example, a cylinder, a piston and the like of automobile fuel pump system in high contact pressure, and a method for producing the stainless steel parts of this kind.

### 2. Description of the Prior Art

Cylinders and pistons in precision machines are required for a certain measure of corrosion and abrasion resistance, therefore martensitic stainless steel SUS440C (C: 0.95∼1.20 %, Si: not more than 1.00 %, Mn: not more than 1.00 %, P: not more than 0.040 %, S: not more than 0.030 %, Cr: 16.00∼18.00 %, the remainder being substantially Fe) is used usually. However, the martensitic stainless steel SUS440C is shaped through cutting work since it is not excellent in cold and warm workability. Additionally, the steel material of this kind is very excellent is hardenability and the parts made of this steel material is entirely hardened through quench-and-temper treatment, therefore machine work of the quench-and-tempered parts becomes difficult. Furthermore, a large strain is caused by quench-and-temper treatment and it is difficult to reform the strain in the parts.

The above-mentioned martensitic stainless steel is very poor also in machinability, and it is difficult to drill small holes or so at the time of manufacturing precision parts made from the martensitic stainless steel. Accordingly, sometimes only a portion required for the corrosion resistance and quench hardness in the precision parts is formed by using the martensitic stainless steel, the other structural portion in the precision parts is formed by using ordinal structural steel, such as S45C (0.42∼0.48 % C, 0.15∼0.35 % Si, 0.60∼0.90 % Mn), for example, and then they have been used after combining with each other. However additional process such as welding, thermal insert or the like becomes necessary after the machine work in order to combine the respective parts.

On the other side, martensitic stainless steel SUS420J2 (C: 0.26∼0.40 %, Si: not more than 1.00 %, Mn: not more than 1.00 %, P: not more than 0.040 %, S: not more than 0.030 %, Cr: 12.00∼14.00 %, the remainder being substantially Fe) is excellent in the cold workability and it is possible to carry out cold and warm forging by using this stainless steel, however the steel has a weak point that it is not possible to improve the quench hardness up to HV 630 (HRC 57) even subjecting to induction hardening.

JP-A-81 76 752 discloses a martensitic heat resistant steel containing N as an impurity in an amount of not higher than 0.015% in order to avoid deterioration of the cold forgeability in the martensitic steel.

### SUMMARY OF THE INVENTION

It is, therefore, an object of the invention to solve the aforementioned problems of the conventional material steels and to provide martensitic stainless steel parts and a method for producing the parts which are possible to be shaped through the cold work and cutting work, and have the corrosion resistance in a certain degree and surface hardness improved up to HV 630 (HRC 57) or above.

As a result of investigation and examination concerning high-hardness steels having the cold workability nearly equal to that of ordinal structural steels, possible to be case-hardened up to HV 630 (HRC 57) or above in the desired depth through the induction hardening and suitable to be applied to pistons or cylinders in order to solve the aforementioned problems, the inventors have found that it is possible to reconcile the cold workability and the corrosion resistance by defining Cr content in a range of 4.0 to 11.0 % from a viewpoint that the high-hardness steels used for the parts such as pistons or cylinders are not required for the corrosion resistance as high as that of SUS440 steel or SUS420J2 steel. Furthermore, it has been found that it is effective to contain 0.3 to 0.6 % of C in order to inhibit growth of coarse carbides harmful to the cold workability and to obtain the quench hardness, and addition of N and Mo in a proper quantity contributes to improvement of the corrosion resistance.

In the induction hardening of the steels having alloying elements such as SUS440C steel, especially containing Cr in a large amount, much time is required for dissolving carbides in the steel, therefore it is necessary to heat the steel for a long time or at a high temperature. However, retained austenite is generated through such the long time or high-temperature heating in a large quantity and it becomes difficult to obtain objective quench hardness of HV 630 (HRC 57) or above. It has been found that it is necessary to reduce C content down to a minimum amount required for hardening and further reduce alloying elements, especially Cr content as low as possible in order to avoid such the problem.

The present invention is accomplished by obtaining these findings as mentioned above.

That is, martensitic stainless steel parts according to this invention has a hollow cylindrical shape or a shaft-like shape, for example, and chemical compositions consisting by weight percentage of 0.3 to 0.6 % of C, not more than 1.0 % of Si, not more than 1.0 % of Mn, not more than 0.04 % of P, not more than 0.03 % of S, 4.0 to 11.0 % of Cr, 0.02 to 0.2 % of N, optionally not more than 1.0 % of Mo according to demand, and the remainder being Fe and unavoidable impurities, furthermore the parts are subjected to induction hardening.

The martensitic stainless steel parts according to another embodiment of this invention has chemical compositions consisting by weight percentage of 0.3 to 0.6 % of C, not more than 0.25 % of Si, not more than 0.4 % of Mn, not more than 0.015 % of P, not more than 0.01 % of S, not more than 0.003 % of 0, 4.0 to 11.0 % of Cr, optionally not more than 1.0 % of Mo (0.02 to 0.2 % of N,) according to demand, and the remainder being Fe and unavoidable impurities, and the parts are subjected to induction hardening.

In the martensitic stainless steel parts according to the other embodiment of this invention, the parts may be further subjected to one or both surface treatment of high speed shot peening with fine particles and nitriding on the induction hardened face thereof.

The martensitic stainless steel parts according to this invention may be used as cylinders or pistons, for example.

In the method for producing the martensitic stainless steel parts according to another aspect of this invention, cold or warm forging of the material steel is carried out, which has chemical compositions consisting by weight percentage of 0.3 to 0.6 % of C, not more then 0.25 % of Si, not more than 0.4 % of Mn, not more than 0.015 % of P, not more than 0.01 % of S, not more than 0.003 % of 0, 4.0 to 11.0 % of Cr, 0.02 to 0.2 % of N, optionally not more than 1.0 % of Mo according to demand, and the remainder being Fe and unavoidable impurities, the obtained forging is subjected to induction hardening after being shaped in a desired shape through the other working process such as machine cutting or so according to demand, and further subjected optionally to one or both surface treatment of high speed shot peening with fine particles and nitriding on the induction hardened face thereof according to demand.

### BRIEF DESCRIPTION OF THE DRAWINGS

FIG. 1 is a conceptive sectional view illustrating an example of the apparatus for subjecting martensitic stainless steel parts to the induction hardening on the inner surface of the parts; and
FIGS. 2A to 2D are sectional view of the martensitic stainless steel parts illustrating the steps of the warm forging process for evaluating warm workability of the steels in examples of this invention.

### DETAILED DESCRIPTION OF THE INVENTION

Next, explanation will be given below about chemical compositions of the martensitic stainless steel to be used for this invention and the reason why they are limited to the above-mentioned ranges.

### C: 0.3∼0.6 %

C is an element to be contained in order to improve the abrasion resistance by increasing the hardness, the effect of C is not sufficient if it is less than 0.3 % and, the cold workability is degraded owing to the generation of coarse carbides and quenching cracks become easy to be caused at the induction hardening when C exceeds 0.6 %. Accordingly, C is defined in a range of 0.3 to 0.6 %.

### Si: not more than 1.0 %

Si is to be added as a deoxidizer at the time of steel making, and Si in the steel is an element having a tendency to deteriorate the cold workability by solution-strengthening a ferrite phase in the matrix of spheroidized structure. Therefore, Si is defined to not more than 1.0 % because micro cracks become easy to be developed at the time of working when Si exceeds 1.0 %.

It is necessary to limit Si to not more than 0.25 % in a case where the steel is subjected to the cold or warm forging in the working process.

### Mn: 1.0 %

Mn is to be added as a deoxidizer at the time of steel making similarly to Si, and is also an element effective to improve the hardenability, so that it is desirable to be added in a proper quantity. However, Mn more than 1.0 % harms the cold workability of the steel by promoting work hardening, therefore Mn content is limited to not more than 1.0 %.

It is preferable to limit Mn to not more than 0.4 % in the case where the steel is subjected to the cold or warm forging in the working process.

### P: not more than 0.04 %

P is an element harmful to the corrosion resistance, toughness and ductility of the steel and it is desirable to reduce as low as possible, but P not more than 0.04 % is out of question, so that the upper limit of P is defined as 0.04 %. However, it is desirable to limit P in an amount of not more than 0.015 % in the case where the steel is subjected to the cold or warm forging in the working process.

### S: not more than 0.03 %

S is an element harmful to the hot and cold workability and the corrosion resistance of the steel and desirable to reduce as low as possible, but S not more than 0.03 % is not a serious problem and S is defined to not more than 0.03 %, preferably to not more than 0.01 %.

### Cr: 4.0∼11.0 %

Cr is an element to be contained in order to improve the corrosion resistance and the quench hardness by the induction hardening. It is necessary to contain Cr of 4.0 % or above in order to obtain the corrosion resistance in the level such that rusting can be prevented in a relatively mild corrosive environment. Further addition of Cr improves the corrosion resistance but increases the amount of the carbides, and the formation of the coarse carbides deteriorates the cold workability of the steel when Cr is added more than 11.0 %. Furthermore, solid solution of the carbides become insufficient at the time of induction hardening and it becomes rather difficult to ensure the quench hardness, and Cr content is defined in a range of 4.0 to 11.0 %.

### Mo: not more than 1.0 %

Mo is an element to be contained in order to improve the corrosion resistance of the steel, however Mo more than 1.0 % deteriorates the cold workability and increases the material cost of the steel, therefore Mo content is limited to 1.0 % or below.

### N: 0.02 to 0.2 %

N is an element to be contained in order to improve the corrosion resistance similarly to Mo, N less than 0.02 % is not effective and N more than 0.2 % degrades the workability of the steel. Therefore, N content is defined in a range of 0.02 to 0.2 %.

N content may be controlled by selection of the refining atmosphere, bubbling of N₂ gas, addition of nitriding alloys and so on.

### O and Ni as impurities

Although 0 is an impurity and it is preferable to be low, when 0 is merely contained up to 0.003 %, generated oxides are small in the amount and effects on the cold workability, fatigue strength, toughness and ductility are not so remarkable. Accordingly, it is desirable to define 0 content to not more than 0.003 %.

Ni is an element brought from scraps of the raw material, and has the effect of improving the ductility of the martensite phase in some degree. However, Ni makes softening to be difficult when it is increased, so that it is desirable to define Ni content to not more than 0.6 %.

In the martensitic stainless steel parts according to this invention, the alloy steel is used which consists by weight percentage of 0.3 to 0.6 % of C, not more than 1.0 % of Si, not more than 1.0 % of Mn, not more than 0.04 % of P, not more than 0.03 % of S, 4.0 to 11.0 % of Cr, 0.02 to 0.2 % of N, optionally not more than 1.0 % of Mo according, to demand, and the remainder being Fe and unavoidable impurities, and the induction hardening is carried out on the contact faces of the parts. Therefore, rusting is never caused in the relatively mild environment, it is possible to obtain required quench hardness of HV 630 (HRC 57) or above through the induction hardening and the parts are hardened down to the desired depth.

In the martensitic stainless steel parts according to an embodiment of this invention, the alloy steel is used, which consists by weight percentage of 0.3 to 0.6 % of C not more than 0.25 % of Si, not more than 0.4 % of Mn, not more than 0.015 % of P, not more than 0.01 % of S, not more than 0.003 % of 0, 4.0 to 11.0 % of Cr, 0.02 to 0.2 % of N, optionally not more than 1.0 % of Mo according to demand, and the remainder being Fe and unavoidable impurities, and the induction hardening is at least carried out on the contact face of the parts. Therefore, rusting is never caused in the relatively mild environment, it is possible to obtain required quench hardness of HV 630 (HRC 57) or above only at a position in desired depth through the induction hardening, and possible to apply the cold or warm forging in the production process of the parts.

Furthermore, the martensitic stainless steel parts according to the other embodiment of this invention are further subjected to one or both surface treatment of high speed shot peening with fine particles and nitriding on the hardened face after performing the induction hardening on the contact face thereof, accordingly the hardness of the contact face is further increased and the abrasion of the parts is decreased. Additionally, many microscopic depressions are formed on the face of the parts by using spherical shots in the shot peening, thereby holding lubricating oil in the depressions and further improving the seizure resistance at the sliding face of the parts.

The martensitic stainless steel to be used in this invention may be obtained through the well-known usual process, that is, alloy steel having the afore-mentioned chemical compositions is molten in the furnace such as a high-frequency induction furnace, the molten steel is cast into an ingot, then the obtained ingot is bloomed through the hot forging or hot rolling, and the obtained bloom is further hot-rolled into steel material with desired size.

The martensitic stainless steel parts according to this invention are used as hollow components such as a cylinder and shaft-like shaped components such as a piston, shaft or so, for example, and may be manufactured, for example, by the method comprising the steps of cutting the steel material obtained through the above-mentioned process after subjecting to spheroidizing annealing, cutting and grinding material steel cut out from the spheroidized steel into parts having the predetermined shape and size through the machine working after forming by cold or warm forging, subjecting the parts to at least induction hardening on the contact face, optionally further subjecting the parts to one or both surface treatment of high speed shot peening using fine particles or nitriding on the induction hardened surface of the parts according to demand.

In this invention, the induction hardening of the shaft-like shaped parts such as the piston may be carried out by the usual method well-known in the past, that is the method of quenching the parts by dropping into cooling liquid or spraying the cooling liquid after heating the parts in the heating coil.

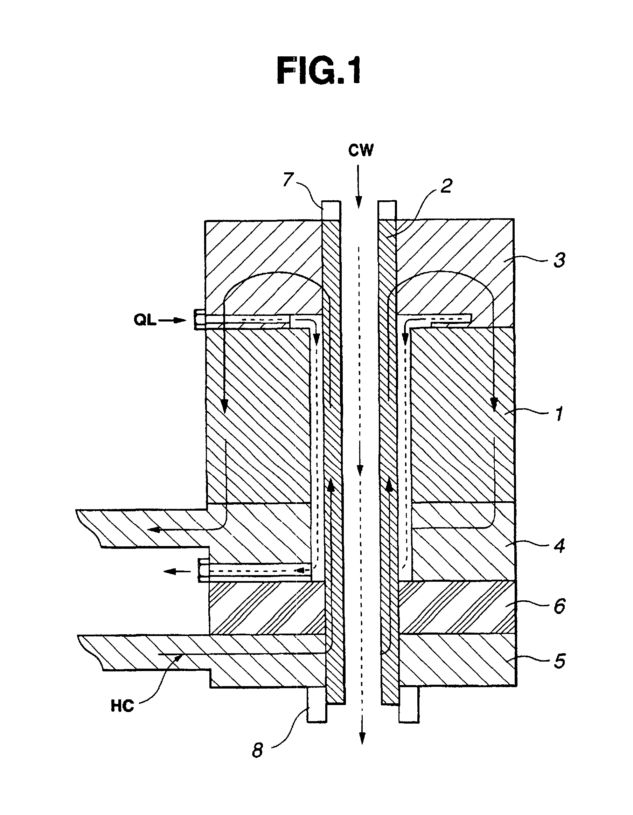

In a case of induction hardening on the inner surface of the hollow parts such as the cylinder, especially parts having hole with a diameter of 10 mm or below, it is possible to harden by using an apparatus shown in FIG. 1, for example.

Namely, the induction hardening apparatus shown in FIG. 1 comprises a support and coil component 5 formed with a hole at the center thereof, a lower presser and coil component 4 placed on the support and coil component 5 through an insulating plate 6, an upper presser and coil component 3 for holding a work (parts) 1 placed on the lower presser and coil component 4, a tubular coil component 2 disposed in the holes of respective components 3 to 5 and designed so as to pass coil-cooling water thereinto , and seals 7 and 8.

The hollow work (parts) 1 to be treated is set between the upper and lower support and coil components 3 and 4, and secured after passing the tubular coil component 2 into the hole of the work 1. In this state, the work 1 is heated by passing a high-frequency current HC into the lower presser and coil component 4, the tubular coil component 2, the work 1 and the lower presser and coil component 4. Successively, the inner surface of the work 1 is quenched by pouring quenching liquid QL into the hole of the work 1 from the upper presser and coil component 3 and draining from the lower presser and coil component 4 when the work 1 is heated at the predetermined temperature, thereby hardening the inner surface of the work 1.

In this invention, the high speed shot peening may be performed by projecting hard particles with diameters of 10∼200 µm, preferably of 50∼100 µm on the induction-hardened face at a collision speed of 80 m/sec or above.

Further, the nitriding may be carried out through the usual nitriding method well-known in the past, for example, by quenching the work after maintaining it in an atmosphere of NH₃ gas heated at a temperature of 450 to 600 °C for 2 to 6 hours.

### EXAMPLE

Next, examples of this invention will be explained below together with comparative examples.

Martensitic stainless steels having chemical compositions shown in Table 1 were molten in the furnace such as the high-frequency induction furnace and cast into ingots, respectively, Subsequently, the obtained ingots were bloomed through hot forging, and then bar steels of 35 mm in diameter were produced through hot rolling. The obtained bar steels were subjected to spheroidizing annealing by cooling them down to 600 °C at a cooling rate of 15 °C/hour after heating at 850 °C for 3 hours and then cooling in air down to room temperature. These bar steels were shaped into cylindrical specimens of 6 mm in diameter and 12 mm in height by machine work, respectively.

Each of the cylindrical specimens was loaded in the axial direction, and cold forgeability of the respective steels was evaluated by measuring draft (upsetting ratio) at the time of generating a cracks in the specimen in the first place. The obtained results are shown in a column of "Cold Forgeability" in Table 1.

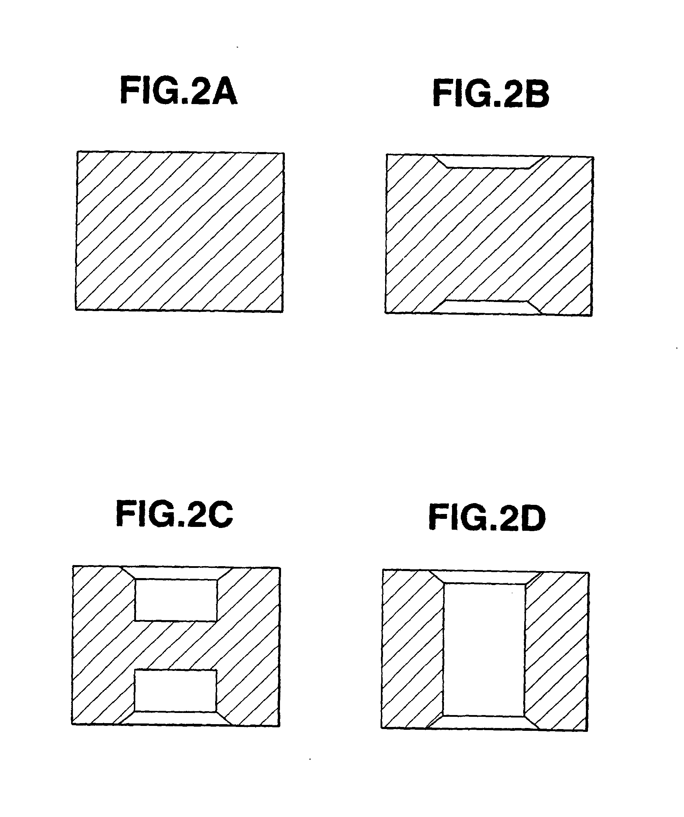

Further, cylindrical specimens of 30 mm in diameter and 30 mm height were cut out from the spheroidized respective bar steels, and warm forgeability test was carried out by applying hoad on the cylindrical specimen by a press of 400 ton after heating the specimen at 300 °C and punching out a hole of 10 mm diameter through the forging process shown in FIGS. 2A to 2D. The obtained results of the punching workability are shown in a column of "Warm Forgeability" in Table 1 with marks ○, Δ and ×. In this Table 1, mark ○ represents a specimen generated with no chack, mark Δ represents a specimen partially generated with cracks and mark × represents a specimen impossible to be punched.

Furthermore, hollow cylindrical specimens of 30 mm in outside diameter, 15 mm in inside diameter and 30 mm in height were cut out from the spheroidized respective bar steels of 35 m in diameter. In this time, four specimens were cut out from each of bar steels having inventive chemical compositions and single specimen was cut out from each of bar steels having comparative chemical compositions. The obtained hollow cylindrical specimen was respectively subjected to induction hardening on the inner surface thereof by supplying a high-frequency current of 80 kHz and 100 kW for 10 seconds using the apparatus as shown in FIG. 1. The induction-hardened specimen was respectively cut at the middle portion thereof, and hardness of the respective specimen was measured at four points away as much as 0.5 mm from the inner surface of the specimen. The average of four measurement is shown in a column of "Induction Hardening (IH)" in Table 1. The hardness of the specimens according to inventive examples No. 9 and No. 10 was measured over a depth range of 0.1 mm to 5.0 mm in four directions, and the obtained results are shown in Table 2 and Table 3, respectively. The hardness was measured by the micro Vickers hardness tester with 300 g load.

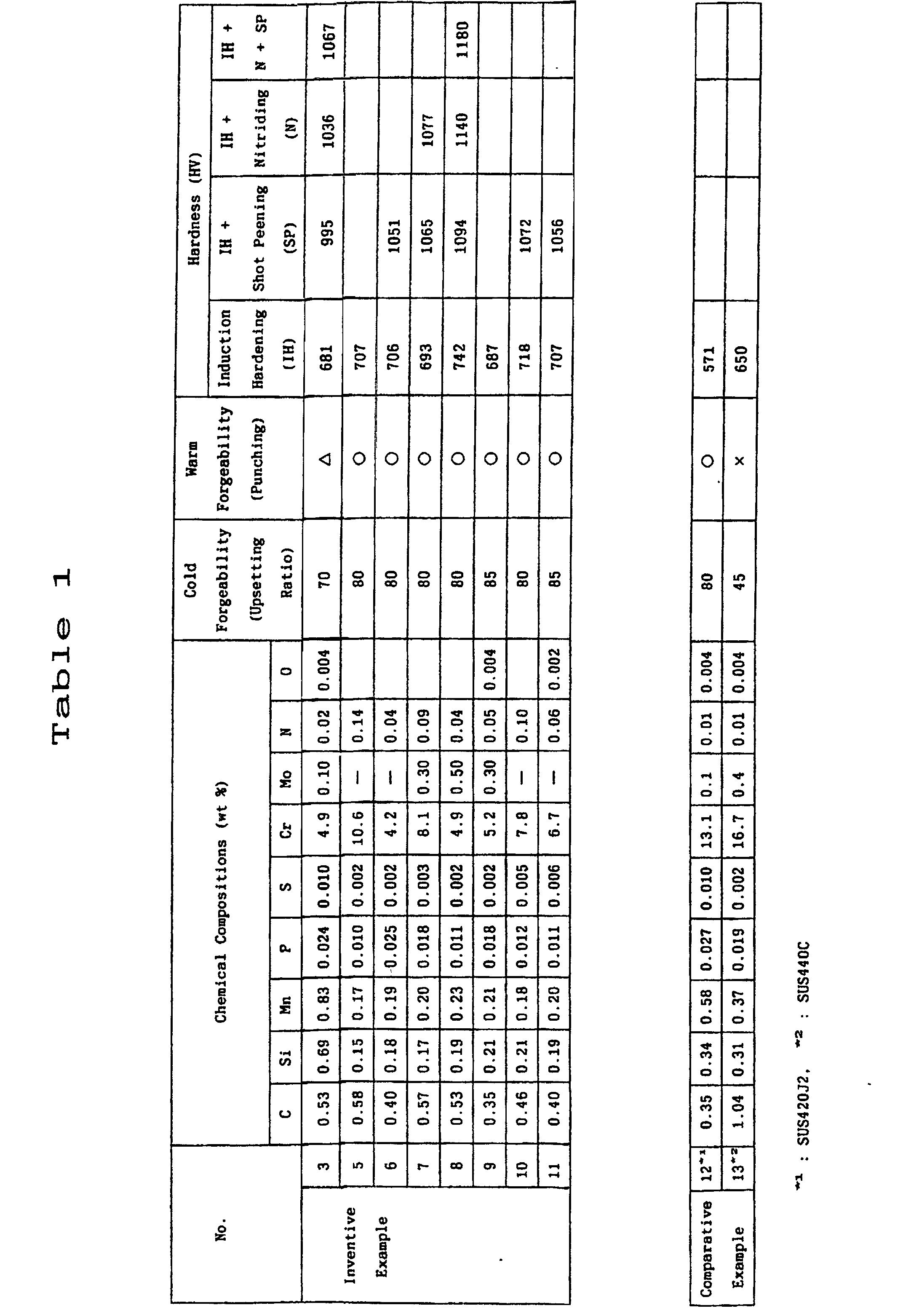

**Table 2**

| | Distance from Inner Surface (mm) | | | | | | | | | | |
|---|---|---|---|---|---|---|---|---|---|---|---|
| | 0.1 | 0.5 | 1.0 | 1.5 | 2.0 | 2.5 | 3.0 | 3.5 | 4.0 | 4.5 | 5.0 |
| Hardness (HV) | 717 | 709 | 676 | 568 | 502 | 445 | 326 | 259 | 191 | 192 | 192 |
| | 713 | 699 | 671 | 550 | 477 | 432 | 193 | 196 | 198 | 197 | 195 |
| | 701 | 668 | 643 | 572 | 462 | 390 | 204 | 199 | 194 | 194 | 194 |
| | 727 | 672 | 651 | 597 | 472 | 428 | 204 | 205 | 206 | 205 | 203 |

**Table 3**

| | Distance from Inner Surface (mm) | | | | | | | | | | |
|---|---|---|---|---|---|---|---|---|---|---|---|
| | 0.1 | 0.5 | 1.0 | 1.5 | 2.0 | 2.5 | 3.0 | 3.5 | 4.0 | 4.5 | 5.0 |
| Hardness (HV) | 728 | 712 | 646 | 579 | 496 | 379 | 226 | 257 | 252 | 253 | 253 |
| | 732 | 714 | 687 | 592 | 476 | 363 | 249 | 250 | 250 | 254 | 257 |
| | 731 | 728 | 653 | 601 | 502 | 427 | 255 | 259 | 263 | 258 | 252 |
| | 724 | 717 | 679 | 609 | 513 | 424 | 259 | 262 | 265 | 262 | 259 |

Two specimens of the inventive examples Nos. 3, 6, 7, 8 and 10 were selected respectively among the induction-hardened specimens, and the selected specimens (10 specimens in total) were further subjected to high speed shot peening on the inner surfaces thereof by injecting hard beads with average grain diameter of 50 µm at a collision speed of 100 m/sec. Subsequently, the hardness of the specimens was measured at points distant from the inner surface as much as 5 µm by the micro Vickers hardness tester with 5g load. The obtained results are shown in a column of "IH + Shot Peening (SP)" in Table 1.

Two specimens of the inventive example Nos. 3, 7 and 8 were selected respectively among the induction-hardened specimens, and the selected specimens (6 specimens in total) were further subjected to nitriding by maintaining specimens in NH₃ gas atmosphere at 520 °C for 3 hours. The hardness of the specimens was measured at points of 50 µm from the inner surface by using the micro Vickers hardness tester with 300 g load. The obtained results are shown in a column of "IH + Nitriding (N)" in Table 1.

The specimens of the inventive example No. 8 subjected to the nitriding after the induction hardening were further subjected to high speed shot peening by injecting hard beads with average grain diameter of 50 µm at a collision speed of 100 m/sec. The hardness of the specimens was measured at points of 5 µm distant from the inner surface of the specimens by using the micro Vickers hardness tester with 5 g load. The obtained results are shown in a column of "IH + N + SP" in Table 1.

According to the above-mentioned results, it was confirmed that all the steels of the inventive examples had the cold forgeability indicated by the upsetting ratio of 70 % or more, the warm forgeability indicated by mark ○ or Δ, and the quench hardness higher than HV 630 (HRC 57).

Further, the quench hardness at the inner surface of the specimens of inventive examples was higher than HV 630 (HRC 57) and it was possible to harden omnidirectionally down to 2.5 mm depth or so from the surface as shown in Table 2 and Table 3.

In the specimens of the inventive examples which were further subjected to one or both surface treatment of the high speed shot peening with fine particles and the nitriding, the surface hardness was improved by more than 40 % as compared with that of the specimen of the inventive example merely subjected to the induction hardening.

In comparison of the inventive examples with the comparative example No. 12, that was SUS420J2 steel which was excellent in the cold and warm forgeability but impossible to obtain quench hardness of HV 630 (HRC 57) or more even by subjecting to the induction hardening, all of the inventive examples exibited hardness of HV 657 or above and were superior in the quench hardness, however the inventive examples containing C, Si and Mn in relatively large amounts were only slightly inferior to this comparative example in the cold and warm forgeability.

Furthermore, in comparison with the comparative example No. 13, that was SUS440C which was not excellent in cold and warm workability but not excellent in hardenability, all of the inventive examples exibited hardness of HV 657 or more as mentioned above and were equal or superior to this comparative example in the quench hardness. Additionally, all of the inventive examples were very excellent in the cold and warm forgeability.

According to this invention structured as mentioned above, excellent effects can be obtained as follows.
(1) In the martensitic stainless steel parts according to this invention, they are excellent in the cold and warm forgeability and it is possible to improve the quench hardness at the surface (contact surface) of the parts as much as HV 630 (HRC 57) or above, and possible to harden down to the desired depth. Additionally, it is possible to further improve the surface hardness by 40 % or more as compared with the parts merely subjected to the induction hardening by further subjecting the induction-hardened parts to one or both surface treatment of the high speed shot peening with fine particles and the nitriding after the induction hardening.
(2) In the method for producing martensitic stainless steel parts according to this invention, it is possible to improve productivity of the parts by forming the parts through the cold forging and/or warm forging.

## Claims

1. Martensitic stainless steel parts having chemical compositions consisting by weight percentage of 0.3 to 0.6 % of C, not more than 1.0 % of Si, not more than 1.0 % of Mn, not more than 0.04 % of P, not more than 0.03 % of S, 4.0 to 11.0 % of Cr, 0.02 to 0.2 % of N, optionally not more than 1.0 % of Mo, and the remainder being Fe and unavoidable impurities, wherein said parts are subjected to induction hardening.

2. Martensitic stainless steel parts as set forth in claim 1, wherein said chemical compositions consist by weight percentage of 0.3 to 0.6 % of C, not more than 0.25 % of Si, not more than 0.4 % of Mn, not more than 0.015 % of P, not more than 0.01 % of S, not more than 0.003 % of O, 4.0 to 11.0 % of Cr, 0.02 to 0.2 % of N, optionally not more than 1.0 % of Mo, and the remainder being Fe and unavoidable impurities.

3. Martensitic stainless steel parts as set forth in claim 1 or 2, wherein said parts are further subjected to one or both surface treatment of high speed shot peening with fine particles and nitriding on the induction hardened face thereof.

4. Martensitic stainless steel parts as set forth in any one of claims 1 to 3, wherein said parts are cylinders.

5. Martensitic stainless steel parts as set forth in any one of claims 1 to 3, wherein said parts are pistons.

6. A method for producing martensitic stainless steel parts according to any one of claims 1 to 5, the method comprising the steps of:
cold or warm forging a material steel having chemical compositions consisting by weight percentage of 0.3 to 0.6 % of C, not more than 0.25 % of Si, not more than 0.4 % of Mn, not more than 0.015 % of P, not more than 0.01 % of S, not more than 0.003 % of O, 4.0 to 11.0 % of Cr, 0.02 to 0.2 % of N, optionally not more than 1.0 % of Mo, and the remainder being Fe and unavoidable impurities;
subjecting the obtained forging to induction hardening; and
further subjecting optionally the induction hardened forging to one or both surface treatment of high speed shot peening with fine particles and nitriding on the induction hardened face thereof.

## Patentansprüche

1. Martensitische rostfreie Stahlteile mit chemischen Zusammensetzungen, welche in Gewichtsprozent aus 0,3 bis 0,6 % C, nicht mehr als 1,0 % Si, nicht mehr als 1,0 % Mn, nicht mehr als 0,04 % P, nicht mehr als 0,03 % S, 4,0 bis 11,0 % Cr, 0,02 bis 0,2 % N, wahlweise nicht mehr als 1,0 % Mo, bestehen, und der Restbestandteil Fe und unvermeidbare Verunreinigungen sind, wobei die Teile einem Induktionshärten unterzogen wurden.

2. Martensitische rostfreie Stahlteile nach Anspruch 1, wobei die chemischen Zusammensetzungen in Gewichtsprozent aus 0,3 bis 0,6 % C, nicht mehr als 0,25 % Si, nicht mehr als 0,4 % Mn, nicht mehr als 0,015 % P, nicht mehr als 0,01 % S, nicht mehr als 0,003 % O, 4,0 bis 11,0 % Cr, 0,02 bis 0,2 % N, wahlweise nicht mehr als 1,0 % Mo bestehen, und der Restbestandteil Fe und unvermeidbare Verunreinigungen sind.

3. Martensitische rostfreie Stahlteile nach Anspruch 1 oder 2, wobei die Teile weiterhin einem oder beiden einer Oberflächenbehandlung einer Hochgeschwindigkeits-Kugelbestrahlung mit feinen Teilchen und einem Nitridieren auf ihrer induktionsgehärteten Seite unterzogen wurden.

4. Martensitische rostfreie Stahlteile nach einem der Ansprüche 1 bis 3, wobei die Teile Zylinder sind.

5. Martensitische rostfreie Stahlteile nach einem der Ansprüche 1 bis 3, wobei die Teile Kolben sind.

6. Verfahren zur Herstellung martensitischer rostfreier Stahlteile nach einem der Ansprüche 1 bis 5, wobei das Verfahren die Schritte aufweist:
Kalt- oder Warmschmieden eines Materialstahls mit chemischen Zusammensetzungen, die in Gewichtsprozent aus 0,3 bis 0,6 % C, nicht mehr als 0,25 % Si, nicht mehr als 0,4 % Mn, nicht mehr als 0,015 % P, nicht mehr als 0,01 % S, nicht mehr als 0,003 % O, 4,0 bis 11,0 % Cr, 0,02 bis 0,2 % N, wahlweise nicht mehr als 1,0 % Mo, bestehen, und der Restbestandteil Fe und unvermeidbare Verunreinigungen sind;
Unterziehen des erhaltenen Schmiedestücks einem Induktionshärten; und
weiterhin wahlweise Unterziehen des induktionsgehärteten Schmiedestücks einem oder beiden einer Oberflächenbehandlung einer Hochgeschwindigkeits-Kugelbestrahlung mit feinen Teilchen und einem Nitridieren auf seiner induktionsgehärteten Seite.

## Revendications

1. Pièces en acier inoxydable martensitique dont les compositions chimiques consistent, en % en poids, en 0,3 à 0,6 % de C, pas plus de 1,0 % de Si, pas plus de 1,0 % de Mn, pas plus de 0,04 % de P, pas plus de 0,03 % de S, 4,0 à 11,0 % de Cr, 0,02 % à 0,2 % de N, éventuellement pas plus de 1,0 % de Mo, et le reste étant du Fe et des impuretés inévitables, lesdites pièces étant soumises à une trempe par induction.

2. Pièces en acier inoxydable martensitique selon la revendication 1, dans lesquelles lesdites compositions chimiques consistent en % en poids de 0,3 à 0,6 % de C, pas plus de 0,25 % de silicium, pas plus de 0,4 % de Mn, pas plus de 0,015 % de P, pas plus de 0,01 % de S, pas plus de 0,003 % de O, 4,0 à 11,0 % de Cr, 0,02 à 0,2 % de N, éventuellement pas plus de 1,0 % de Mo, le reste étant du Fe et des impuretés inévitables.

3. Pièces en acier inoxydable martensitique selon la revendication 1 ou la revendication 2, dans lesquelles lesdites pièces sont en outre soumises sur la face trempée par induction à l'un ou aux deux traitements de surfaces qui sont le grenaillage à haute vitesse avec des particules fines et la nitruration.

4. Pièces en acier inoxydable martensitique selon l'une quelconque des revendications 1 à 3, dans lesquelles lesdites pièces sont des cylindres.

5. Pièces en acier inoxydable martensitique selon l'une quelconque des revendications 1 à 3, dans lesquelles lesdites pièces sont des pistons.

6. Méthode pour produire des pièces en acier inoxydable martensitique selon l'une quelconque des revendications 1 à 5, la méthode comprenant les étapes de:
- forgeage à chaud ou à froid d'une pièce en acier ayant la composition chimique consistant en % en poids en 0,3 à 0,6 % de C, pas plus de 0,25 % de Si, pas plus de 0,4 % de Mn, pas plus de 0,015 % de P, pas plus de 0,01 % de S, pas plus de 0,003 % de O, 4,0 à 11,0 % de Cr, 0,02 à 0,2 % de N, éventuellement pas plus de 1,0 % de Mo, le reste étant du Fe et des impuretés inévitables;
- soumettre la pièce forgée obtenue à une trempe par induction; et ensuite soumettre éventuellement la face trempée par induction de la pièce forgée trempée par induction à un ou aux deux traitements de surface de grenaillage à haute vitesse à l'aide de particules fines et la nitruration.
